# EUROPEAN PATENT SPECIFICATION

(11) **EP 3 392 924 B1**
(45) Date of publication and mention of the grant of the patent: **10.05.2023**
(21) Application number: 17167210.8
(22) Date of filing: 20.04.2017
(51) Int. Cl.: H01M 10/04, H01M 50/103, H01M 50/105, H01M 50/342, H01M 50/536, H01M 50/54, H01M 10/52

(54) **BATTERY CELL**
BATTERIEZELLE
ÉLÉMENT DE BATTERIE

(43) Date of publication of application: 24.10.2018
(73) Proprietor: Robert Bosch GmbH, 70442 Stuttgart (DE); GS Yuasa International Ltd., Kyoto-shi, Kyoto 601-8520 (JP)
(72) Inventor: Bach, Tobias, 70372 Stuttgart (DE); Liebenow, Cornelius, 70372 Stuttgart (DE)
(74) Representative: Isarpatent

(56) References cited:
- WO-A1-2016/157685
- JP-A- 2013 161 757
- US-A1- 2003 077 505
- US-A1- 2016 149 193
- US-A1- 2017 018 753

## Description

The invention relates to a battery cell that comprises a negative terminal, a positive terminal and an electrode assembly, the electrode assembly comprising an anode that contains several anode tabs extending from a front edge of the electrode assembly and a cathode that contains several cathode tabs extending from the front edge of the electrode assembly, whereas the anode tabs are connected to the negative terminal and the cathode tabs are connected to the positive terminal.

### State of the Art

Electrical energy can be stored by means of batteries. Batteries change chemical energy into electrical energy. Particularly, rechargeable batteries are known that can be charged and discharged several times. Batteries or battery modules comprise several battery cells that are connected electrically in series or in parallel. Thereby, a battery cell comprises a positive terminal and a negative terminal, whereas the battery cell can be charged and discharged via the terminals.

Especially, lithium ion battery cells are used in rechargeable batteries or battery systems. Lithium ion battery cells have a relatively high energy density. Lithium ion battery cells are used for instance in motor vehicles, in particular in electric vehicles (EV), in hybrid electric vehicles (HEV) and in plug-in hybrid vehicles (PHEV). Lithium ion battery cells may comprise one or more electrode assemblies.

An electrode assembly has a positive electrode called cathode and a negative electrode called anode. The anode and the cathode are separated from one another by means of a separator. The electrodes of the electrode assembly can be formed like foils and wound with interposition of the separator to form an electrode roll, also referred to as jelly-roll. Alternatively, the electrodes of the electrode assembly can be layered with interposition of the separator to form an electrode stack.

Both, the cathode and the anode, comprise a current collector on which a composite material containing an active material, a binder and/or a conductive agent, e.g. carbon black, is applied. The current collector of the cathode is typically made of aluminium and the current collector of the anode is typically made of copper. The cathode composite material contains, for example, a metal oxide as active material. The anode composite material contains, for example, graphite or silicon as active material. In the active material of the anode lithium ions are intercalated.

The electrodes of the electrode assembly contain electrode tabs that extend from the electrode assembly and that are connected to the terminals of the battery cell. In case of error, for example an internal short circuit within the electrode assembly, the electrode assembly is swelling. Hence, the electrode tabs that extend from the electrode assembly are shifted while the terminals remain in their position. Thus, the electrode tabs may be torn apart and electrical connection to the terminals can be lost. In particular, a discharging device which is connected to the terminals is in this case inoperable and the battery cell cannot be discharged.

Document US 2016/268580 A1 discloses a rechargeable battery that includes an electrode assembly and a case that accommodates the electrode assembly. Electrode tabs are provided that extend from the case. The electrode tabs comprise at least one wire having multiple bent portions. When a tensile force is applied, the bent portions of the electrode tabs are unbent.

Document US 2015/318534 A1 discloses an electrode assembly for a secondary battery and a respective secondary battery. The electrode assembly comprises electrode plates that contain tabs which extend from the electrode assembly. The tabs are bent twice and are connected with a lead. The lead is welded to the electrode tabs.

WO 2016/157685 A1 discloses a battery cell with an electrode assembly arranged within an encasement, wherein the electrode assembly comprises an anode that contains several anode tabs and a cathode that contains several cathode tabs, and wherein the anode tabs and the cathode tabs are extending from a front edge of the electrode assembly. The anode tabs are connected to a negative terminal of the battery and the cathode tabs are connected to a positive terminal of the battery, wherein the anode tabs and/or the cathode tabs are designed such that when in case of error the negative terminal and/or the positive terminal is shifted, the anode tabs and/or the cathode tabs are deformed while ensuring electrical connection between the anode and the negative terminal and/or between the cathode and the positive terminal.

Further examples of such battery cells are disclosed in US 2017/018753 A1, JP 2013 161757 A and US 2016/149193 A1.

### Disclosure of the Invention

The present invention provides a battery cell with the features of claim 1.

The inventive battery cell is designed so that in case of error, the anode tabs and/or the cathode tabs are not torn apart. Thus, the electrical connection of the electrodes to the terminals of the battery cell remains intact. Thus, a discharging device which is connected to the terminals is in case of error still operable.

Moreover, in case of error the front portion of the electrode assembly is compressed by the bracket element while other portions of the electrode assembly are able to swell and to expand. Hence, the anode tabs and the cathode tabs that extend from the front edge of the electrode assembly are not shifted or are shifted only insignificantly relative to the terminals and hence are not torn apart. Thus, the electrical connection of the electrodes to the terminals remains intact.

Furthermore, as the bracket element is made of a metal, the bracket element has a relatively high stiffness and can withstand a swelling of the electrode assembly.

According to an advantageous embodiment of the invention, the anode tabs and/or the cathode tabs comprise at least one rated break point. Said at least one rated break point is provided within the anode tabs and/or the cathode tabs such that the at least one rated break point bursts when tensile stress occurs and hence the anode tabs and/or the cathode tabs can unfold without being torn apart. Thus, the electrical connection of the electrodes to the terminals remains intact.

According to another advantageous embodiment of the invention, the anode tabs and/or the cathode tabs comprise at least one folded region. Said at least one folded region is provided within the anode tabs and/or the cathode tabs such that the at least one folded region unfolds when tensile stress occurs and hence the anode tabs and/or the cathode tabs can unfold without being torn apart. Thus, the electrical connection of the electrodes to the terminals remains intact.

Preferably, the at least one folded region of the anode tabs and/or of the cathode tabs is fixed by dint of at least one welding point. Hence, the at least one folded region of the anode tabs and/or of the cathode tabs cannot unfold at normal operation of the battery cell but only in case of error, in particular when tensile stress occurs.

Thereby, the anode tabs and/or the cathode tabs are designed such that a deformation of the anode tabs and/or a deformation of the cathode tabs in case of error is irreversible.

According to the invention, the electrode assembly is arranged within an encasement. At least one predetermined breaking point is provided within the encasement. Hence, in case of error when an overpressure occurs within the encasement, the predetermined breaking point breaks and an opening arises. Thus, the overpressure may escape through said opening in the encasement and further deformation of the electrode assembly is prevented.

Preferably, the at least one predetermined breaking point is provided in an area averted from the front edge of the electrode assembly. Hence, the overpressure within the encasement may escape through an opening which arises averted from the front edge of the electrode assembly.

According to the invention, the bracket element is arranged outside the encasement.

A battery cell according to the invention is useable advantageously in particular in an electric vehicle (EV), in a hybrid electric vehicle (HEV), in a plug-in hybrid vehicle (PHEV) or in a stationary application. But also other applications are feasible.

### Advantages of the Invention

Within a battery cell according to the invention, the electrical connection of the electrodes to the terminals remains intact in case of error, for example when a nail penetrates the battery cell and causes an internal short cut. Hence, a discharging device which is connected to the terminals is in this case still operable and the battery cell can be discharged. Thereby, the electrode tabs can be designed relatively short and thus, the electrical resistance of the electrode tabs is minimal. Hence, safety of a battery cell, in particular of a lithium ion battery cell, is improved and a thermal runaway as well as an explosion of the battery cell is prevented.

### Brief Description of the Drawings

For a better understanding of the aforementioned embodiments of the invention as well as additional embodiments thereof, reference should be made to the description of embodiments below, in conjunction with the appended drawings showing:
- Figure 1: a sectional view of a battery cell,
- Figure 2: a sectional view of an area around a front edge of an electrode assembly according to a first embodiment,
- Figure 3: a sectional view of an area around a front edge of the electrode assembly from figure 2 in case of an error,
- Figure 4: a sectional view of an area around a front edge of an electrode assembly according to a second embodiment,
- Figure 5: another sectional view of an area around a front edge of the electrode assembly from figure 4,
- Figure 6: a sectional view of an area around a front edge of the electrode assembly from figure 4 in case of an error,
- Figure 7: another sectional view of an area around a front edge of the electrode assembly from figure 4 in case of an error,
- Figure 8: a sectional view of the battery cell with a bracket element,
- Figure 9: a sectional view of the battery cell from figure 8 in case of an error,
- Figure 10: a perspective view of a battery cell with a bracket element, not according to the invention.

- Figure 11: a perspective view of a battery cell with a bracket element, not according to the invention.

- Figure 12: a perspective view of a battery cell with a bracket element according to the invention.
- Figure 13: a perspective view of a battery cell with an encasement, not according to the invention.
- Figure 14: a perspective view of a battery cell with an encasement, not according to the invention.
- Figure 15: a perspective view of a battery cell with an, not according to the invention.

Hereinafter, the present invention will be described with reference to the drawings. The drawings only provide schematic views of the invention. Like reference numerals refer to corresponding parts, elements or components throughout the figures, unless indicated otherwise.

### Description of Embodiments

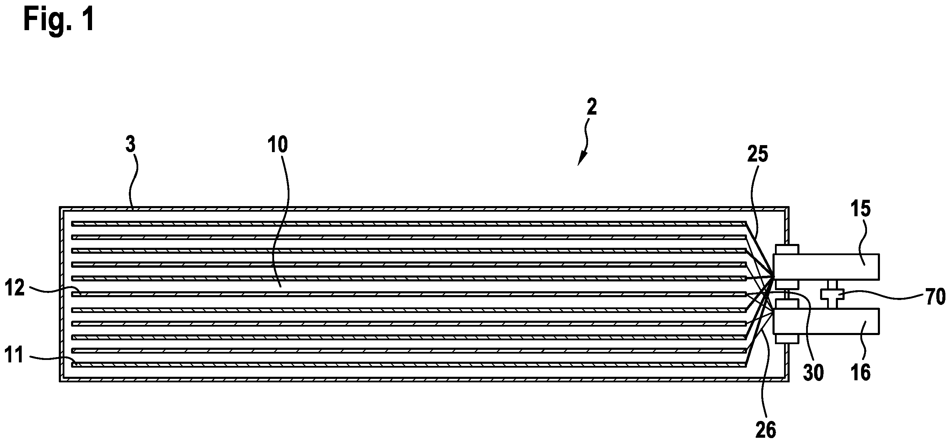

Figure 1 shows a sectional view of a battery cell 2. The battery cell 2 contains an encasement 3 which is for example of pouch type and which has a prismatic shape. The battery cell 2 further contains an electrode assembly 10, which is arranged within the encasement 3. The encasement 3 is a bag or a pouch made of a soft and flexible material that surrounds the electrode assembly 10.

The electrode assembly 10 contains an anode 11, a cathode 12 and a separator that is arranged between the anode 11 and the cathode 12. Presently, the electrode assembly 10 is shaped as an electrode stack. That means the anode 11 and the cathode 12 of the electrode assembly 10 consist of several flat sheets that are stacked alternately to form a pile or a stack. The separator which is not shown here also consists of several flat sheets that are stacked between the sheets of the anode 11 and the sheets of the cathode 12.

Furthermore, the battery cell 2 contains a negative terminal 15 and a positive terminal 16. The terminals 15, 16 serve for charging and discharging the battery cell 2. The terminals 15, 16 penetrate the encasement 3. Thereby, the terminals 15, 16 are arranged adjacent to a front edge 30 of the electrode assembly 10. A discharging device 70 is connected to the negative terminal 15 and the positive terminal 16.

The anode 11 contains an anode composite material and an anode current collector. The anode composite material and the anode current collector are attached to one another. The anode current collector is electrically conductive and is made of a metal, in particular of copper. The cathode 12 contains a cathode composite material and a cathode current collector. The cathode composite material and the cathode current collector are attached to one another. The cathode current collector is electrically conductive and is made of a metal, in particular of aluminium.

The anode 11 contains several anode tabs 25 that extend from the front edge 30 of the electrode assembly 10. The anode tabs 25 protrude from the anode current collector and are electrically connected to the negative terminal 15 of the battery cell 2. The cathode 12 contains several cathode tabs 26 that extend from the front edge 30 of the electrode assembly. The cathode tabs 26 protrude from the cathode current collector and are electrically connected to the positive terminal 16 of the battery cell 2.

Thereby, the anode tabs 25 are designed such that when in case of error the negative terminal 15 is shifted relatively to the electrode assembly 10 and tensile stress occurs to the anode tabs 25, the anode tabs 25 are deformed while ensuring electrical connection between the anode 11 and the negative terminal 15. Correspondingly, the cathode tabs 26 are designed such that when in case of error the positive terminal 16 is shifted relatively to the electrode assembly 10 and tensile stress occurs to the cathode tabs 26, the cathode tabs 26 are deformed while ensuring electrical connection between the cathode 12 and the positive terminal 16.

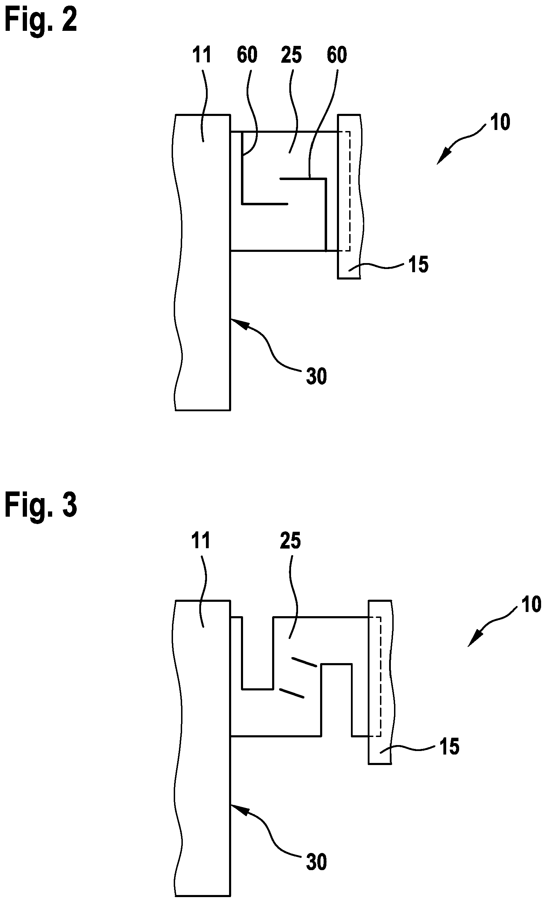

Figure 2 shows a sectional view of an area around a front edge 30 of an electrode assembly 10 according to a first embodiment. Thereby, a sheet of the anode 11, an anode tab 25 and the negative terminal 15 are shown. The anode tab 25 comprises rated break points 60. Said rated break points 60 are provided within the anode tab 25 such that the rated break points 60 burst when tensile stress occurs in case of an error.

Figure 3 shows a sectional view of an area around the front edge 30 of the electrode assembly 10 from figure 2 in case of an error. The rated break points 60 have burst caused by tensile stress. The anode tab 25 has unfolded without being torn apart. Thus, the electrical connection of the anode 11 to the negative terminal 15 remains intact. The cathode tabs 26 that are not shown here are designed analogical to the anode tabs 25.

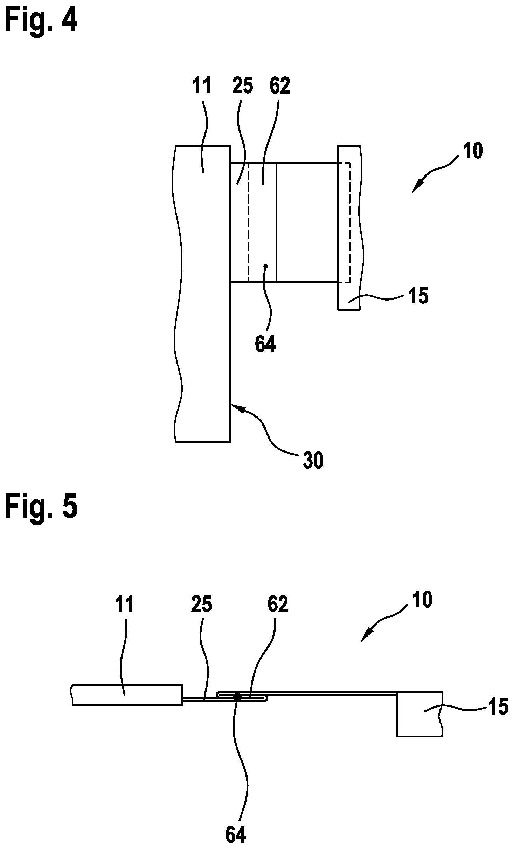

Figure 4 shows a sectional view of an area around a front edge 30 of an electrode assembly 10 according to a second embodiment. Thereby, a sheet of the anode 11, an anode tab 25 and the negative terminal 15 are shown. The anode tab 25 comprises a folded region 62. Said folded region 62 is provided within the anode tab 25 such that the folded region 62 unfolds when tensile stress occurs in case of an error. The folded region 62 of the anode tab 25 is fixed by dint of a welding point 64. Figure 5 shows another sectional view of the area around the front edge 30 of the electrode assembly 10 shown in figure 4 from a different perspective.

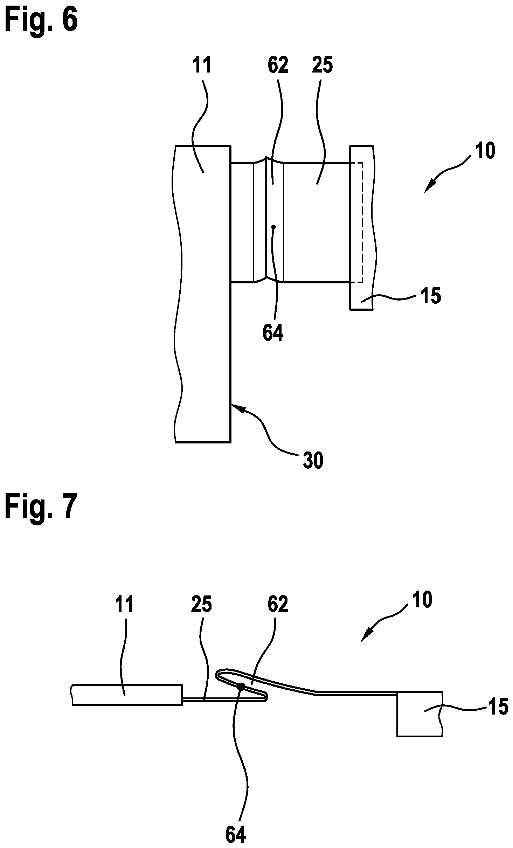

Figure 6 shows a sectional view of an area around the front edge 30 of the electrode assembly 10 of figure 4 in case of an error. The welding point 64 has burst caused by tensile stress. The folded region 62 has unfolded partly. Thereby, the anode tab 25 has unfolded partly without being torn apart. Thus, the electrical connection of the anode 11 to the negative terminal 15 remains intact. The cathode tabs 26 that are not shown here are designed analogical to the anode tabs 25. Figure 7 shows another sectional view of the area around the front edge 30 of the electrode assembly 10 of figure 4 in case of an error from a different perspective.

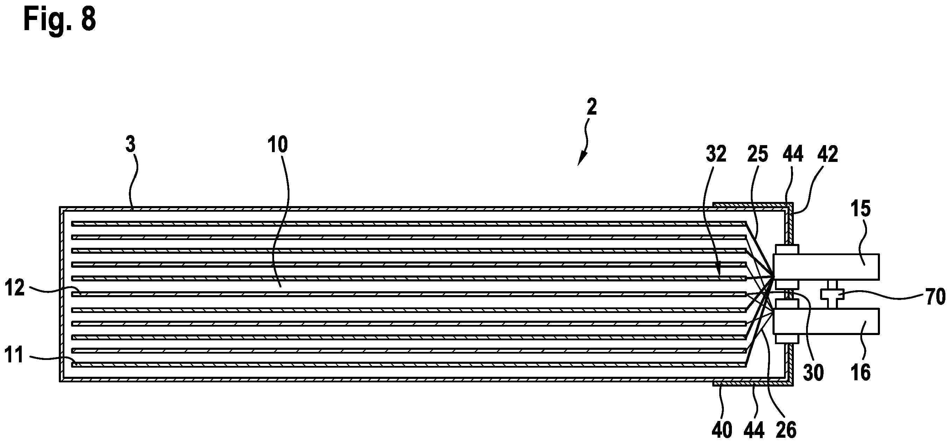

Figure 8 shows a sectional view of the battery cell 2 with a bracket element 40. The bracket element 40 is provided that encompasses a front portion 32 of the electrode assembly 10. Thereby, the front portion 32 is an area which is located adjacent to the front edge 30 of the electrode assembly 10. The front portion 32 extends from the front edge 30 in a direction opposite to the anode tabs 25 and the cathode tabs 26. The bracket element 40 serves for limiting or preventing swelling of the front portion 32 of the electrode assembly 10.

Presently, the bracket element 40 contains a basis leg 42 from which two side legs 44 extend. Thereby, the basis leg 42 is arranged parallel to the front edge 30 of the electrode assembly 10 and the side legs 44 surround the front portion 32 of the electrode assembly 10 partly. Hence, the bracket element 40 has a U-shape and the side legs 44 extend orthogonally from the basis leg 42 and parallel to one another. Thereby, the electrode assembly 10 is inserted partly into the bracket element 40 such that the front edge 30 of the electrode assembly 10 is arranged adjacent to the basis leg 42.

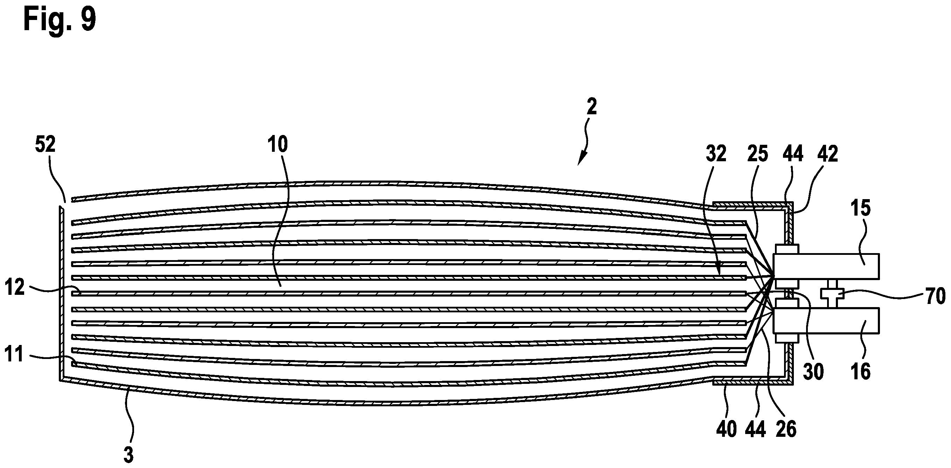

Figure 9 shows a sectional view of the battery cell 2 of figure 8 in case of an error, for example an internal short circuit within the electrode assembly 10. The front portion 32 of the electrode assembly 10 is compressed by the bracket element 40. Other portions of the electrode assembly 10 are swelling and expanding. The anode tabs 25 and the cathode tabs 26 are shifted only insignificantly relative to the terminals 15, 16. The electrical connection of the anode tabs 25 and the cathode tabs 26 to the terminals 15, 16 remains intact.

In an area averted from the front portion 32 of the electrode assembly 10 a predetermined breaking point 52 is provided in the encasement 3. Caused by the internal short circuit within the electrode assembly 10, an overpressure occurs within the encasement 3 and the predetermined breaking point 52 is breaking. Hence, an opening arises and the overpressure may escape through said opening in the encasement 3.

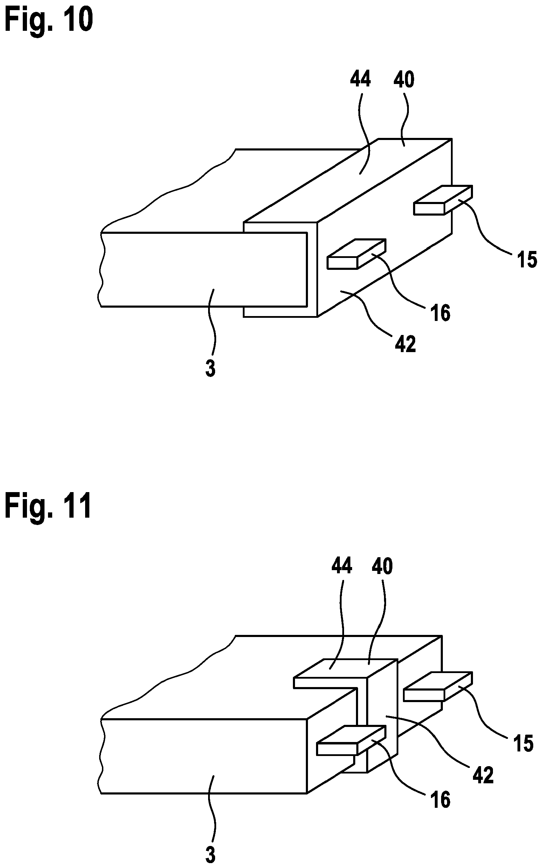

Figure 10 shows a perspective view of a battery cell 2 with a bracket element 40, not according to the invention. The bracket element 40 extends over the whole width of the encasement 3. Thereby, the bracket element 40 has a U-shape and contains a basis leg 42 from which two side legs 44 extend. Thereby, the terminals 15, 16 penetrate the basis leg 42 of the bracket element 40. Presently, the bracket element 40 is arranged outside the encasement 3. However, the bracket element 40 also can be arranged inside the encasement 3.

Figure 11 shows a perspective view of a battery cell 2 with a bracket element 40, not according to the invention. The bracket element 40 extends in an area between the terminals 15, 16. Thereby, the bracket element 40 has a U-shape and contains a basis leg 42 from which two side legs 44 extend. Thereby, the terminals 15, 16 surround the basis leg 42 of the bracket element 40. Presently, the bracket element 40 is arranged outside the encasement 3. However, the bracket element 40 also can be arranged inside the encasement 3.

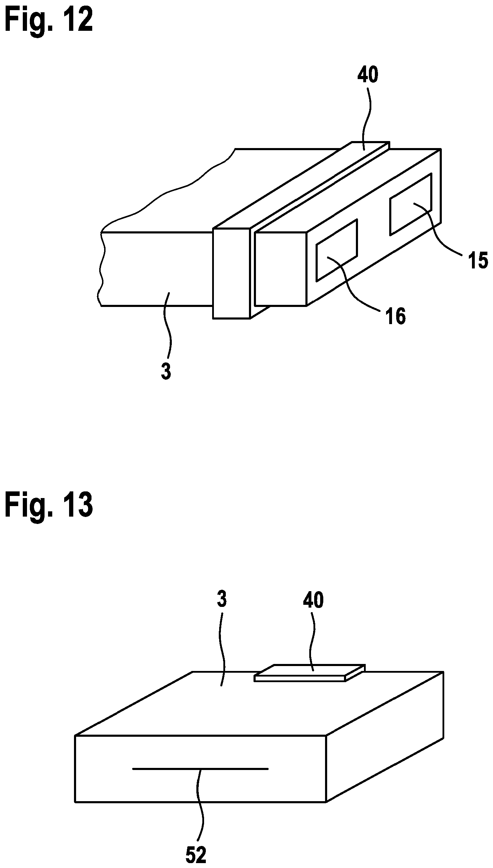

Figure 12 shows a perspective view of a battery cell with a bracket element 40 according to the invention. The bracket element 40 according to the invention is shaped annular and surrounds the encasement 3 and the front portion 32 of the electrode assembly 10 which is arranged inside the encasement 3. Hence, the bracket element 40 is arranged outside the encasement 3.

Figure 13 shows a perspective view of a battery cell 2 with an encasement 3, not according to the invention. In an area averted from the front portion 32 of the electrode assembly 10 and from the bracket element 40 a predetermined breaking point 52 is provided in the encasement 3. In the encasement 3 according to the first embodiment, the predetermined breaking point 52 is provided in a side portion of the encasement 3 opposite to the front portion 32 of the electrode assembly 10 and of the bracket element 40.

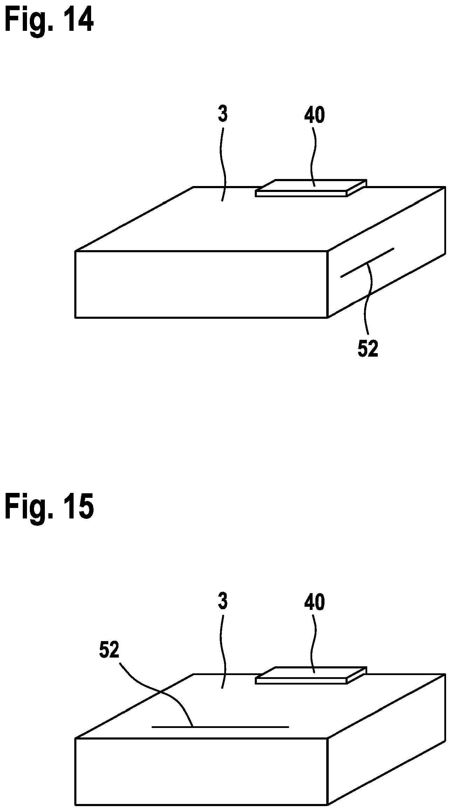

Figure 14 shows a perspective view of a battery cell 2 with an encasement 3, not according to the invention. In an area averted from the front portion 32 of the electrode assembly 10 and from the bracket element 40 a predetermined breaking point 52 is provided in the encasement 3. In the encasement 3 according to the second embodiment, the predetermined breaking point 52 is provided in a small side portion laterally to the side portion opposite to the front portion 32 of the electrode assembly 10 and of the bracket element 40.

Figure 15 shows a perspective view of a battery cell 2 with an encasement 3, not according to the invention. In an area averted from the front portion 32 of the electrode assembly 10 and from the bracket element 40 a predetermined breaking point 52 is provided in the encasement 3. In the encasement 3 the predetermined breaking point 52 is provided in a large side portion laterally to the side portion opposite to the front portion 32 of the electrode assembly 10 and of the bracket element 40.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings and those encompassed by the attached claims. The embodiments were chosen and described in order to explain the principles of the invention and its practical applications, to thereby enable others skilled in the art to utilize the invention and various embodiments with various modifications as are suited to the particular use contemplated.

## Claims

1. Battery cell (2), comprising:
a negative terminal (15), a positive terminal (16), an encasement (3), and
an electrode assembly (10),
wherein the electrode assembly (10) is arranged within the encasement (3),
the electrode assembly (10) comprising :
an anode (11) that contains several anode tabs (25) extending from a front edge (30) of the electrode assembly (10) and
a cathode (12) that contains several cathode tabs (26) extending from the front edge (30) of the electrode assembly (10),
whereas
the anode tabs (25) are connected to the negative terminal (15) and
the cathode tabs (26) are connected to the positive terminal (16),
wherein the anode tabs (25) and/or the cathode tabs (26) are designed such that
when in case of error the negative terminal (15) and/or the positive terminal (16) is shifted relatively to the electrode assembly (10),
the anode tabs (25) and/or the cathode tabs (26) are deformed while ensuring electrical connection between the anode (11) and the negative terminal (15) and/or between the cathode (12) and the positive terminal (16),
wherein said error comprising one of:
occurrence of tensile stress in anode tabs (25) and/or cathode tabs (26),
occurrence of an overpressure within the encasement (3), and
occurrence of an internal shortcut in the battery cell (2), and
wherein said encasement (3) is a bag or a pouch made of a soft and flexible material that surrounds the electrode assembly (10),
**characterized in that**
the battery cell (2) comprises a bracket element (40) made of a metal, wherein the bracket element (40) is shaped annular and surrounds the encasement (3) and, while the electrode assembly (10) is arranged inside the encasement (3), encompasses a front portion (32) of the electrode assembly (10), which is located adjacent to the front edge (30) of the electrode assembly (10).

2. Battery cell (2) according to claim 1, **characterized in that**
the anode tabs (25) and/or the cathode tabs (26) comprise at least one rated break point (60),
wherein said rated break point (60) is a break point provided within the anode tabs (25) and/or the cathode tabs (26) such that said break point bursts when tensile strength occurs is case of an error.

3. Battery cell (2) according to one of the preceding claims, **characterized in that**
the anode tabs (25) and/or the cathode tabs (26) comprise at least one folded region (62).

4. Battery cell (2) according to one of the preceding claims,
whereas at least one breaking point (52) is provided within the encasement (3).

5. Battery cell (2) according to claim 4, **characterized in that**
the at least one predetermined breaking point (52) is provided in an area averted from the front edge (30) of the electrode assembly (10).

6. Battery cell (2) according to one of claims 4 and 5, **characterized in that**
the encasement (3) is shaped prismatic.

7. Usage of a battery cell (2) according to one of the preceding claims in an electric vehicle (EV), in a hybrid electric vehicle (HEV), in a plug-in hybrid vehicle (PHEV) or in a stationary application.

## Patentansprüche

1. Batteriezelle (2), die Folgendes umfasst:
eine negativen Anschluss (15), einen positiven Anschluss (16), ein Gehäuse (3) und eine Elektrodenbaugruppe (10), wobei die Elektrodenbaugruppe (10) in dem Gehäuse (3) angeordnet ist,
wobei die Elektrodenbaugruppe (10) Folgendes umfasst:
eine Anode (11), die mehrere Anodenfahnen (25) enthält, die sich von einer Vorderkante (30) der Elektrodenbaugruppe (10) erstrecken, und
eine Kathode (12), die mehrere Kathodenfahnen (26) enthält, die sich von der Vorderkante (30) der Elektrodenbaugruppe (10) erstrecken,
wobei
die Anodenfahnen (25) mit dem negativen Anschluss (15) verbunden sind und
die Kathodenfahnen (26) mit dem positiven Anschluss (16) verbunden sind,
wobei die Anodenfahnen (25) und/oder die Kathodenfahnen (26) derart ausgestaltet sind, dass
wenn im Fall eines Fehlers der negative Anschluss (15) und/oder der positive Anschluss (16) relativ zu der Elektrodenbaugruppe (10) verschoben wird,
die Anodenfahnen (25) und/oder die Kathodenfahnen (26) verformt werden, während eine elektrische Verbindung zwischen der Anode (11) und dem negativen Anschluss (15) und/oder zwischen der Kathode (12) und dem positiven Anschluss (16) sichergestellt wird,
wobei der Fehler eines der Folgenden umfasst:
Auftreten einer Zugspannung in Anodenfahnen (25) und/oder Kathodenfahnen (26),
Auftreten eines Überdrucks innerhalb des Gehäuses (3) und Auftreten eines internen Kurzschlusses in der Batteriezelle (2), und
wobei das Gehäuse (3) eine Tasche oder ein Beutel aus weichem und flexiblem Material ist, die bzw. der die Elektrodenbaugruppe (10) umgibt,
**dadurch gekennzeichnet, dass**
die Batteriezelle (2) ein Halterungselement (40) aus Metall umfasst, wobei das Halterungselement (40) ringförmig geformt ist und das Gehäuse (3) umgibt und während die Elektrodenbaugruppe (10) in dem Gehäuse (3) angeordnet ist einen vorderen Abschnitt (32) der Elektrodenbaugruppe (10), der an die Vorderkante (30) der Elektrodenbaugruppe (10) angrenzt, umschließt.

2. Batteriezelle (2) nach Anspruch 1, **dadurch gekennzeichnet, dass**
die Anodenfahnen (25) und/oder die Kathodenfahnen (26) mindestens eine Sollbruchstelle (60) umfassen,
wobei die Sollbruchstelle (60) eine in den Anodenfahnen (25) und/oder den Kathodenfahnen (26) vorgesehene Bruchstelle ist, sodass die Bruchstelle zerbricht, wenn im Fall eines Fehlers eine Zugspannung auftritt.

3. Batteriezelle (2) nach einem der vorhergehenden Ansprüche, **dadurch gekennzeichnet, dass**
die Anodenfahnen (25) und/oder die Kathodenfahnen (26) mindestens einen gefalteten Bereich (62) umfassen.

4. Batteriezelle (2) nach einem der vorhergehenden Ansprüche,
wobei mindestens eine Bruchstelle (52) in dem Gehäuse (3) vorgesehen ist.

5. Batteriezelle (2) nach Anspruch 4, **dadurch gekennzeichnet, dass**
die mindestens eine vorbestimmte Bruchstelle (52) in einem von der Vorderkante (30) der elektronischen Baugruppe (10) abgewandten Bereich vorgesehen ist.

6. Batteriezelle (2) nach einem der Ansprüche 4 und 5,
**dadurch gekennzeichnet, dass**
das Gehäuse (3) prismenförmig ist.

7. Verwendung einer Batteriezelle (2) nach einem der vorhergehenden Ansprüche in einem Elektrofahrzeug (EV), in einem Hybridelektrofahrzeug (HEV), in einem Plug-In-Hybridfahrzeug (PHEV) oder in einer stationären Anwendung.

## Revendications

1. Cellule de batterie (2), comprenant :
une borne négative (15), une borne positive (16), une enveloppe (3), et
un ensemble d'électrodes (10),
l'ensemble d'électrodes (10) étant agencé à l'intérieur de l'enveloppe (3),
l'ensemble d'électrodes (10) comprenant :
une anode (11) qui contient plusieurs languettes anodiques (25) s'étendant depuis un bord avant (30) de l'ensemble d'électrodes (10) et
une cathode (12) qui contient plusieurs languettes cathodiques (26) s'étendant depuis le bord avant (30) de l'ensemble d'électrodes (10),
tandis que
les languettes anodiques (25) sont connectées à la borne négative (15) et
les languettes cathodiques (26) sont connectées à la borne positive (16),
les languettes anodiques (25) et/ou les languettes cathodiques (26) étant conçues de telle sorte que
en cas d'erreur la borne négative (15) et/ou la borne positive (16) est/sont déplacée(s) par rapport à l'ensemble d'électrodes (10),
les languettes anodiques (25) et/ou les languettes cathodiques (26) étant déformée(s) tout en assurant une connexion électrique entre l'anode (11) et la borne négative (15) et/ou entre la cathode (12) et la borne positive (16),
ladite erreur comprenant un évènement parmi :
la survenue d'une contrainte de traction dans des languettes anodiques (25) et/ou des languettes cathodiques (26),
la survenue d'une surpression à l'intérieur de l'enveloppe (3), et
la survenue d'un court-circuit interne dans la cellule de batterie (2), et
ladite enveloppe (3) étant un sac ou un pochon fait d'un matériau souple et flexible qui entoure l'ensemble d'électrodes (10),
**caractérisée en ce que**
la cellule de batterie (2) comprend un élément support (40) fait d'un métal, l'élément support (40) étant en forme annulaire et entourant l'enveloppe (3) et, tandis que l'ensemble d'électrodes (10) est agencé à l'intérieur de l'enveloppe (3), enveloppant une portion avant (32) de l'ensemble d'électrodes (10), laquelle est située de manière adjacente au bord avant (30) de l'ensemble d'électrodes (10).

2. Cellule de batterie (2) selon la revendication 1, **caractérisée en ce que**
les languettes anodiques (25) et/ou les languettes cathodiques (26) comprennent au moins un point nominal de rupture (60),
ledit point nominal de rupture (60) étant un point de rupture prévu à l'intérieur des languettes anodiques (25) et/ou des languettes cathodiques (26) de telle sorte que ledit point de rupture rompt lorsqu'une résistance à la traction survient en cas d'erreur.

3. Cellule de batterie (2) selon l'une des revendications précédentes, **caractérisée en ce que** les languettes anodiques (25) et/ou les languettes cathodiques (26) comprennent au moins une région pliée (62) .

4. Cellule de batterie (2) selon l'une des revendications précédentes, tandis qu'au moins un point de rupture (52) est prévu à l'intérieur de l'enveloppe (3) .

5. Cellule de batterie (2) selon la revendication 4, **caractérisée en ce que**
l'au moins un point de rupture prédéterminé (52) est prévu dans une zone à l'écart du bord avant (30) de l'ensemble d'électrodes (10).

6. Cellule de batterie (2) selon l'une des revendications 4 et 5, **caractérisée en ce que**
l'enveloppe (3) est de forme prismatique.

7. Utilisation d'une cellule de batterie (2) selon l'une des revendications précédentes dans un véhicule électrique (VE), dans un véhicule électrique hybride (VEH), dans un véhicule hybride rechargeable (VHR) ou dans une application immobile.
